# EUROPEAN PATENT APPLICATION

(11) **EP 0 777 112 A1**
(43) Date of publication of application: **04.06.1997**
(21) Application number: 96118315.9
(22) Date of filing: 15.11.1996
(51) Int. Cl.: G01F 23/296

(54) **Liquid level measuring device**

(30) Priority: 28.11.1995 GB 9524329
(71) Applicant: THE WHITAKER CORPORATION, Wilmington, Delaware 19808 (US)
(72) Inventor: Brown, Richard Hunter, 63303 Dreieich-Offenthal (DE)
(74) Representative: Heinz-Schäfer, Marion

(57) **Abstract**

A fluid level measuring device (1,100,200,300,500) for determining the level of fluid (14,114,214,314) within a vessel where the measuring device comprises at least two sets (6a-f; 116a-f-123a-f) of acoustic transmitting and receiving devices that are spaced at different levels along the vessel and where an acoustic signal is generated by each of the transmitters that travels a path to the receiving device that is dependent on the presence of the fluid (14,114,214,314), the measuring device being characterized in that both transmitters (16a-f; 116a-f-123a-f) are coupled into a gang and emit their respective acoustic signals simultaneously and where the signal path between the transmitters and their respective receivers are of different length, thereby providing a time delay between the returning signals.

## Description

This invention relates to an apparatus for measuring the liquid level within a vessel and in particular an apparatus that utilizes acoustic transmission characteristics in order to perform the measurement operation.

It is well known to use acoustic waves in order to measure how much liquid is contained within a vessel. In addition, it is known to use Piezo electric material as both the transmitter and receiver of said acoustic waves. A problem with all measuring devices or sensors is the degree of resolution that is necessary to provide useable information. For example, consider a simple liquid vessel, such as a right cylinder. In a case like this and in other vessels, the volume of the fluid within the cylinder is easily determined if the height of the fluid therein can be determined accurately. Where an acoustic measuring device is to be used, a generator/transmitter of acoustic waves and a receiver of those waves must be positioned relative to the fluid level such that signal transmission between transmitter and receiver occurs dependent on whether or not fluid at that particular location is present. As may be readily imagined, the more transmitter/receiver pairs that are disposed along the height of the cylinder, the more accurate the determination of how much fluid is contained therein will be.

However, a problem with simply placing a large number of transmitter receiver pairs along the height of the tank is not only the cost associated with the particular transmitter and receiver devices, which can be drastically reduced through the use of Piezo electric material as is disclosed in (EP-A-0 515 254 and WO 93/02340), but also includes the costs associated with the driving and detection circuitry necessary to operate the transmitter and receiver pair. For example, in a commercial fluid level sensor device such as that described, it would ultimately be desired to produce an application - specific integrated circuit in order to make the device work. If it were determined that 48 transmitter/receiver pairs spread out along the height of the vessel are necessary to provide the desired resolution, this application - specific integrated circuit would require at least 48 input/output pins to connect to the 48 transducers plus pins for ground, power and data transmission. The number of pins required would ultimately easily exceed 50. While there are significant economies of scale involved in production of devices such as this and particularly with integrated circuit production, a limiting factor is the number of pins required. Therefore, it could be expected that an application-specific integrated circuit having twice the number of input/output pins than another application specific integrated circuit will be slightly less than double the cost. At present, the cost per pin would make a high-volume liquid level sensor with an application-specific integrated circuit having a high number of input/output pins marginally commercially feasible.

Therefore, while it is known to reduce the cost of the transmitter/receiver pair by the utilization of piezo electric material and the possibility of using the same piezo electric component as both the transmitter and receiver by switching between transmission and receive modes, it is necessary to provide a structure to reduce the number of pins that are necessary in an application-specific integrated circuit in order to have a commercially feasible device for such high volume industries as automotive and in particular fluid measurement in the numerous vessels therein.

A solution to the afore mentioned problem is achieved by providing a fluid level measuring device for determining the level of fluid within a vessel where the measuring device comprises at least two acoustic transmitting and receiving devices where the transmitting and receiving devices are spaced at different levels along the vessel and where an acoustic signal is generated by each of the transmitters where said signal that travels along a corresponding path that is dependent upon the presence of the fluid to reach the receiver, the fluid level measuring device being characterized in that both of the transmitters are driven to emit their respective acoustic signal simultaneously and the length of the path associated with the first pair is different than the length of the path associated with the second pair, thereby providing a time delay between the returning signals.

It is an advantage of this invention that by the use of a single excitation signal both transmitters may be driven to emit the necessary acoustic signal and as a result of the different path lengths associated therewith, the time delay enables the apparatus to measure different fluid levels as the signals will be received spaced in time; thereby enabling the number of pins associated with an application specific integrated circuit to be greatly reduced. In addition, it is another advantage that the different path lengths associated with the acoustic signals can be established by providing a stepped member that is included in the path of the associated signals. In addition, it is advantageous that the afore going is simple to manufacture and of compact design and construction.

The invention will now be described by way of example with reference to the following drawings, wherein;
Figure 1 is a diagrammatic representation of a device incorporating the present invention;
Figure 2 is a chart presenting the diagrammatical response of the device of Figure 1 versus time for water and methanol if the vessel is full;
Figure 3 is another diagrammatic representation of an enhanced version of the present invention of Figure 1;
Figure 4 is a diagrammatic representation of another embodiment of the present invention;
Figure 5 is yet another diagrammatic representation of yet another alternative embodiment of the present invention;
Figure 6 is a perspective view of an apparatus to be placed in a tank, the apparatus incorporating the present invention as represented in Figure 3;
Figure 7 is an exploded lower perspective view of the apparatus of Figure 6;
Figure 8 is a side sectional view of the apparatus of Figure 6; and
Figure 9 is an end sectional view of the apparatus of Figure 6 taken along lines 9-9 of Figure 8.

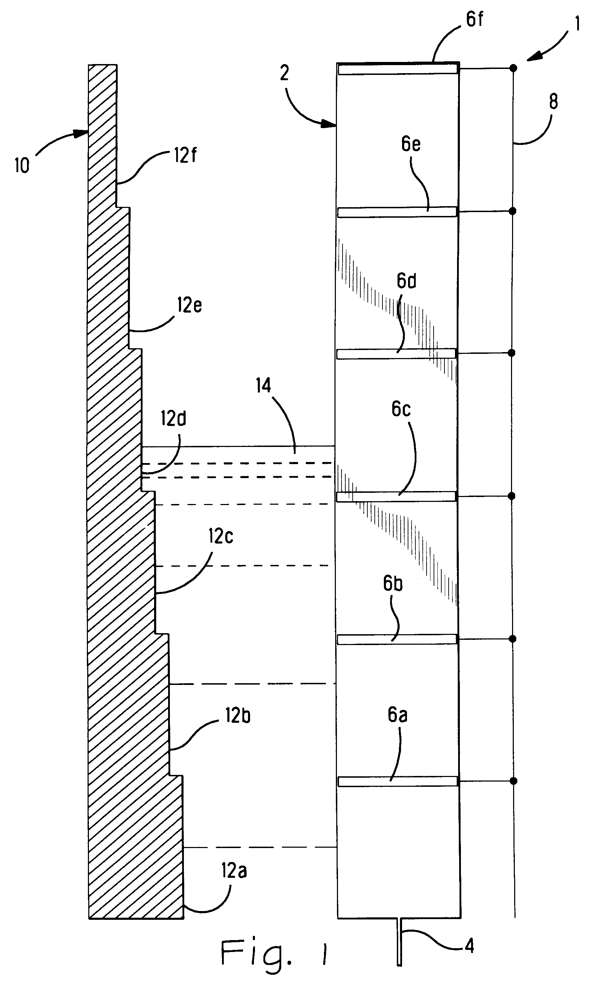

With reference first to Figure 1, the invention is presented in diagrammatic form and will generally be described in basic terms. A liquid level measuring apparatus is shown in representational form generally at 1. A piezo electric film member 2 is provided that is metalized either by depositing metal thereupon through vacuum disposition methods or by the use of a foil or sheet metal plate that is stamped to have the desired characteristics of the front electrode. The metalization is constructed to provide a ground 4 and a plurality of transducer elements 6. The structure could be as follows: a front layer that is a continuous plane of foil, plate or metalization overlying a layer of piezoelectric polymer that is disposed over an electrode pattern formed upon a printed circuit board that carries the appropriate circuitry necessary on the opposite side thereof for operating the apparatus. The transducer elements 6 can function both as transmitters and receivers as is described in WO 93/02340 (incorporated herein by reference for all purposes), whereby electronic circuitry associated therewith switches their function between generation and sensing of acoustic pulses. The transducer elements are all coupled together by into a gang by circuit traces 8 which would be disposed upon a printed circuit board where the piezo electric device has been mounted. Note, the piezo electric device and the circuit traces shown thereupon have been rotated through 90° for ease of viewing and description and in use would face a reflector plate 10 described below. In addition, the printed circuit board and associated electronic circuitry and components have been omitted for clarity.

The piezo electric device is spaced apart from the reflector plate 10 formed of a material that is reflective to acoustic signals. The reflector 10 has a plurality of steps 12a-12f to correspond to the transducer elements 6a-6f. A fluid 14 to be measured is disposed therebetween.

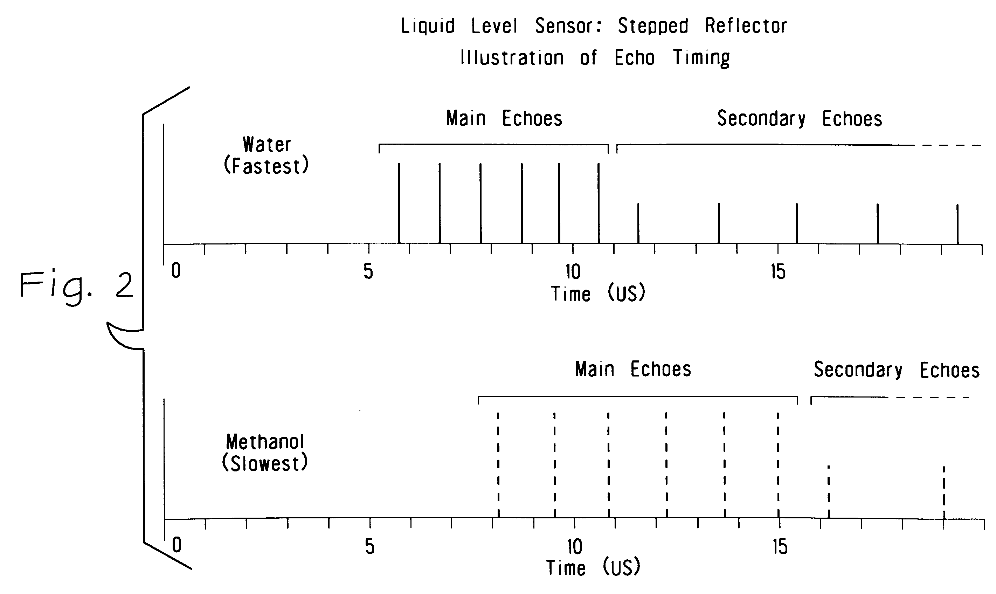

In this case, each of the transducer elements 6a-6f due to the steps 12a-f is located a different distance from the corresponding reflector surfaces. If each segment 6a-6f were to be fired individually, then switched into a receive mode, as described in the afore going references, then the return pulse from each transducer would show unique delay between transmission and reception according to the unique spacing (path length) for that segment. However, if all segments of the gang are interconnected by a single circuit path 8, whereby all are fired as a result of a single initiating pulse, after which the transducer 6a-6f are switched to a receive mode, the return signal presented to detection circuitry consists of up to 6 (6a-6f) discrete pulses (if fluid is present at all levels) that are separated in time according to the difference in the known distance of the reflector steps. The response for both water and methanol is shown in Figure 2 where the fluid level 14 would extend above the highest transducer. For the situation of Figure 1, only the first 3 main echoes would be present. In addition, as can be seen from the chart, it is important that the array of transducers 6a-f may be switched out of the sensing mode before any secondary echoes return. This is accomplished by selecting the spacing between the reflector 10 and transducer array and the step height based on the transmission characteristics of the expected fluid. As the apparatus depends upon being able to capture and count these closely spaced echoes, the broad bandwidth of piezo polymers offers significant advantages.

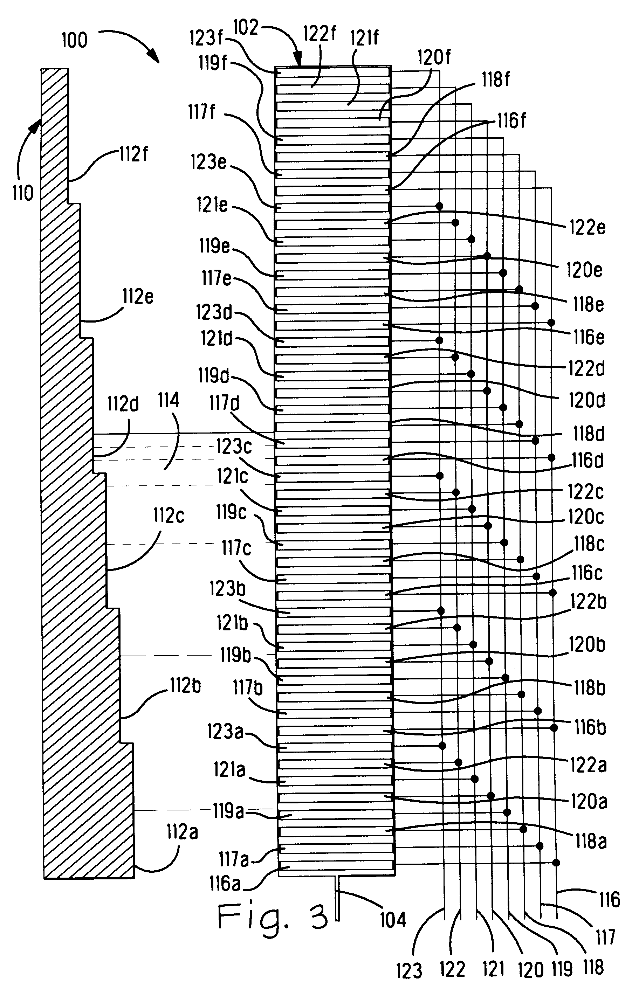

Now with the basic understanding of the inventive concept, a device having a higher resolution is shown within Figure 3 generally at 100. In this device, a reflector plate 110 is used that also has discrete steps 112a-112f thereupon. The reflector plate 110 is opposite a piezo electric element 102 includes 48 transducer elements 116a-f through 123a-f where all of the common transducers (116a-f, 117a-f, ...) are joined together into separate gangs by a common signal path 116-123. This device has a ground contact 104 and 8 signal contacts corresponding to each of the gang tracks 116-123. when a signal is fired into track 116, acoustic generation occurs by the transducers 116a-116f associated with that gang and a characteristic return signal is generated having a given number of pulses that the detection circuitry counts. By proceeding sequentially or in some pattern that does not allow interference between the various transducers a high resolution measurement may be made. It may also be desirable to fire all gangs at once and only switch one gang into the receive mode.

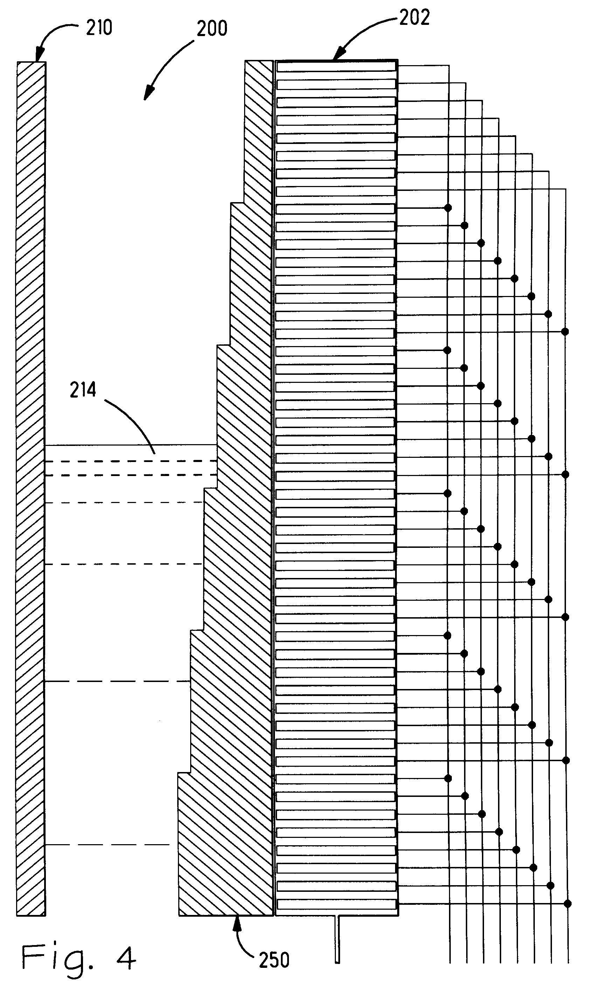

With respect now to Figure 4, an alternative embodiment of the basic device is shown. In this embodiment the structure is shown generally at 200. A standard planar surfaced reflector plate 210 is provided opposite the piezo electric structure 202 that is constructed as outlined above. Attached to the face of the piezo electric member 202 is a stepped transmission plate 250 that is transparent to acoustic signals generated by the piezo electric member 202; however, this transmission plate 250 has the effect of slowing the signals that pass across the thickness thereof. The steps would correspond to different path lengths for the acoustic signals that are still open or closed dependent on fluid presence, once again a return signal having spaced apart pulses will result from each firing of multiple transducers gangs.

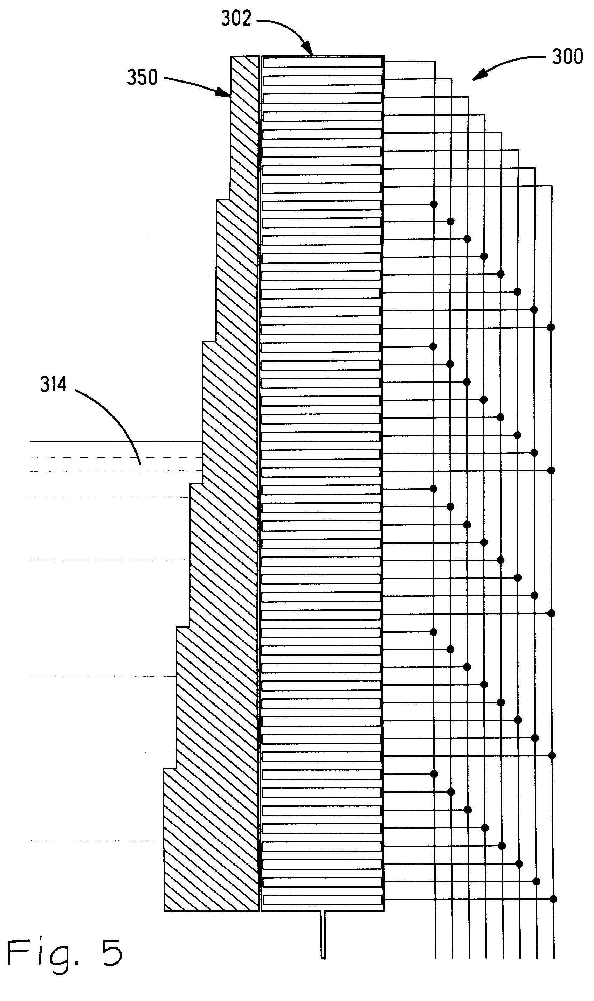

With reference now to Figure 5, device is generally shown at 300 that works on detecting the presence or absence of fluid along a stepped plate 302 such that a reflection is made at the interface with the fluid that is characteristic of whether or not fluid is present. A device such as this type is described in GB patent application no. 95/13267.6. An advantage of this device being that the transmission path, while still dependent upon fluid presence, does not include the fluid directly in the path.

With reference again to Figures 1 and 2, an important aspect of this invention is whether or not there will be any interference between the main echoes which are generated due to reflections at the reflector plate and any subsequent secondary echoes that may be generated by way of additional reflections. It is important to note that the transducer can be switched out of the receive mode prior to any of these reflections returning to the system, thereby preventing the sensing of the additional/echoes. This is a mathematical problem that involves calculations of the speed of sound in the various fluids that may be present in the vessel and the acoustic path based on the step size of the reflector plates. For example, with respect to a system similar to that shown in Figure 1 a minimum spacing between transducer array and reflector of 4.5mm to a maximum spacing of 8.25mm would result in a minimum delay in water of first echo arrival of 5.81 micro seconds which corresponds to a 9mm path length and a maximum delay in methanol to the first echo of 8.16 micro seconds having a similar 9mm path length. This provides a minimum and maximum spacing between valid echoes of .97 micro seconds to 1.36 micro seconds. As shown in Figure 2, the main echoes of either water or methanol would be separate from each other, thereby enabling the transducers to be switched off at a fixed point in time or stopping after counting to 6 pulses such that the secondary echoes would be ignored.

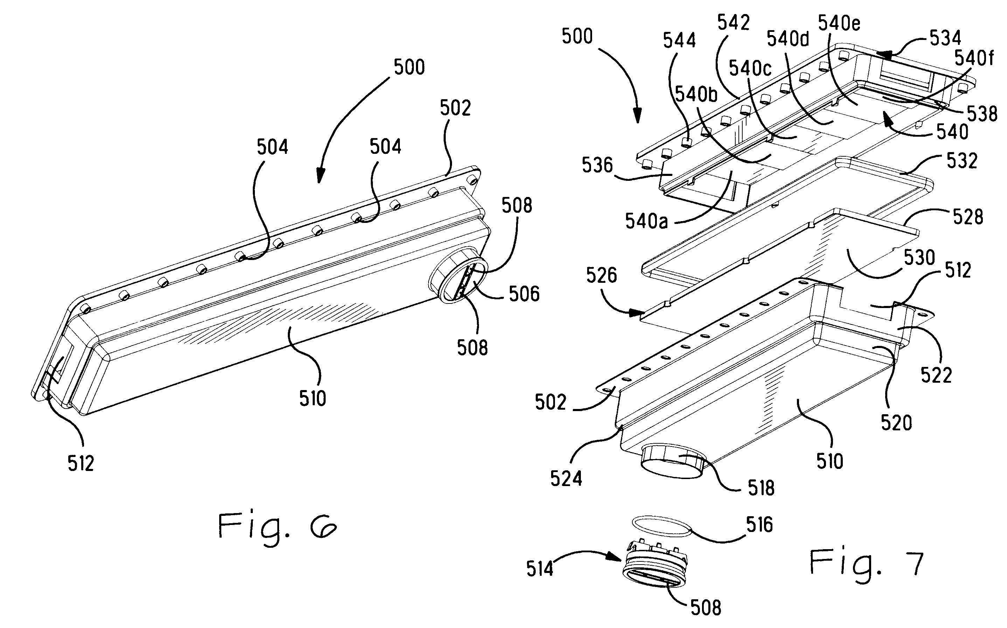

With reference now to Figure 6, a useable embodiment of the invention is shown generally at 500. The level sensor apparatus 500 would be fittable inside a vessel and includes a mounting flange 502 having a plurality of fasteners 504 thereabout for attaching the apparatus 500 to a mounting bracket therein and further assembly as described below. The apparatus 500 further includes a receptacle 506 wherein a plurality of terminals 508 are disposed for forming an electrical interconnection with the active components therein. The receptacle 506 extends outward as a port-like flange from a housing member 510 a sealing boot (not shown) could be attached thereto. The apparatus 50 includes input and output vents 512 at each end thereof to enable the fluid to be measured to pass through.

With reference now to Figure 7, an exploded view of the apparatus 500 is shown. The apparatus 500 includes a connector element 514 having a plurality of contacts 508 therein positioned in the receptacle 506. A sealing gasket 516 is provided such that a fluid tight seal exists at the receptacle 506. The housing 510 is constructed in a shell-like manner having a generally hollow interior including two-tiered pair of cavities 520,522. The upper cavity 522 is in communication with the input and output ports 512. A ledge 524 is formed where the upper and lower tiers 520,522 meet and the flange 502 extends outward at the open upper surface of housing 510. Note, if the housing were out of metal it would have a shielding effect for the circuitry.

An active component 526 that includes the circuitry necessary to interconnect and operate the piezo electric sensor and transducers formed thereupon is formed in a board-like manner. As described in the afore going patent applications, the structure of the active component 526 would involve a piezo electric material being laminated upon an upper surface 528 of a double sided printed circuit board that has the active components disposed on a lower side 530. The components are encased within the lower tier 520 when the active component 526 is seated within the housing 510 and interconnected with the piezo electric structure by conventional means such as plated through holes. The active component 526 includes components thereupon that would be interconnected with the contacts 508 of the connector 514. As the active components are contained within the cavity 520, provided a seal is placed on the upper surface 528 the components will be protected within a sealed cavity. A rectangular sealing gasket 532 is formed to seal around the outer edges of the active component 526 and against the ledge 524. A base plate component 534 includes a shroud portion 536 having a stepped upper edge 538 designed to engage the gasket member 532 and hold the gasket firmly against the housing 510 and active component 526 (see Figure 9). An inner surface of the component 534 includes a stepped reflector plate 540 having multiple steps 540a-540f that will be oriented opposite the transducers as discussed above. A flange 542 extends outward beyond the shroud and includes fasteners 544 for engaging the flange 502 of the housing 510.

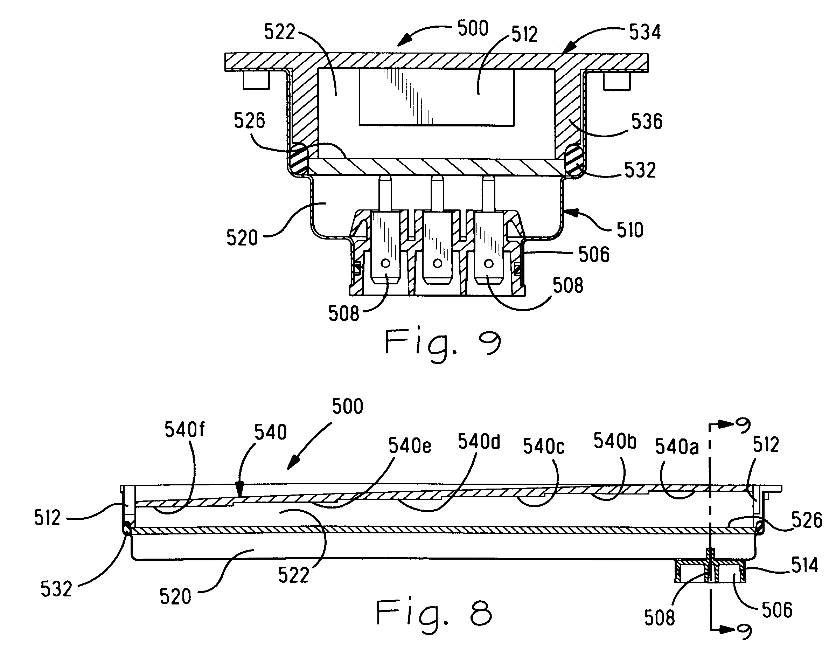

With reference now to Figure 8 and 9, the assembled device 500 may be seen in longitudinal cross-section. In this view, the active device 526 is positioned at the lower tier 520 wherein the active components on the active device 526 are kept contaminant free. The fluid to be measured will be received in the upper tier 522 between the active device 526 and the stepped reflector plate 540 by passing through input and output ports 512. With further reference to Figure 10, the apparatus 500 is shown where the sealing member 532 is compressed by the shroud 536 so that it forms a contaminant tight fit about the housing 510, the active member 526 and the shroud 536. The receptacle 506 contains a plurality of contacts 508 that are shown oriented to be connected with the active component 526.

## Claims

1. A fluid level measuring device (1,100,200,300,500) for determining the level of fluid (14,114,214,314) within a vessel where the measuring device comprises at least two sets of acoustic transmitting and receiving devices (6a-f) that are spaced at different levels along the vessel and where an acoustic signal is generated by each of the transmitters (6a-f) that travels a path to the receiving device (6a-f) that is dependent on the presence of the fluid (14), the measuring device being characterized in that both transmitters (6a-f) are coupled into a gang and emit their respective acoustic signals simultaneously and where the signal path between the transmitters (6a-f) and their respective receivers (6a-f) are of different length, thereby providing a time delay between the returning signals.

2. The fluid level measuring device of claim 1 further characterized in that the transmitting and receiving devices (6a-f) are of piezo electric material.

3. The fluid level measuring device of claim 1 or 2, further characterized in that the transmitting and receiving devices are the same element (6a-f), whereby the transmitter emits the signal and is then switched to a receive mode to detect the signal.

4. The fluid level measuring device of any one of claims 1-3 further characterized in that the acoustic transmitting and receiving devices (6a-f) are oriented to face a reflector plate (10,110,302) having a plurality of steps (12a-f,112a-f) thereupon such that one of the sets of transmitting and receiving devices (6a-f) correspond to one of the steps while the other set corresponds to a second step offset from the first, where the fluid (14) is disposed between the reflector plate (10) and transmitting and receiving devices (6a-f).

5. The fluid level measuring device of any one of claims 1-3 further characterized in that the transmitting and receiving devices (202) are oriented to face a reflector plate (210) having a reflecting surface thereupon and the fluid (214) is located therebetween where further disposed between the transmitting and receiving devices (202) and the reflector plate (210) is a transmission plate (250) that is transmissive of the acoustic signals, said transmissive plate (250) having a stepped surface whereby the thickness of the plate varies at each step where one set of transmitting and receiving devices correspond to a first step and the second set correspond to a second step.

6. The fluid level measuring device of anyone of claims 1-3 further characterized in that the transmitting and receiving devices (302) are arranged on one side of a transmission plate (350) and the fluid is one the opposite side thereof, said transmission plate (350) having a plurality of steps creating different thicknesses and one set of transmitting and receiving devices corresponds to a first step and the other corresponds to a second step, said acoustic signal being reflected by the interface of the stepped reflector and the fluid (314).

7. The fluid level measuring device of any one of the preceding claims further characterized in that the first and second transmitting and receiving devices form a first gang and the device includes multiple gangs of similarly functioning transmitting and receiving devices.

8. The fluid level measuring device of claim 7 further characterized in that one of the gangs (116-123) includes a set of transmitting and receiving devices (116a-123a) having the same path length as that of a set of transmitting and receiving devices (116a-123a) of at least one other gang (116-123).

9. The fluid level measuring device of claim 8, further characterized in that every set of transmitting and receiving devices (116a-123a) every gang (116-123) has a corresponding set of transmitting and receiving devices (116a-123a) of the other gangs.
